Europäisches Patentamt

European Patent Office

Office européen des brevets

(11) Veröffentlichungsnummer: **0 516 868 A1**

## (12) EUROPÄISCHE PATENTANMELDUNG

(21) Anmeldenummer: **91108905.0**

(22) Anmeldetag: **31.05.91**

(51) Int. Cl.5: **A41H 3/00**

(43) Veröffentlichungstag der Anmeldung:
**09.12.92 Patentblatt 92/50**

(84) Benannte Vertragsstaaten:
**DE ES FR GB IT**

(71) Anmelder: **DÜRKOPP SYSTEMTECHNIK GMBH**
**Postfach 6**
**W-4800 Bielefeld 1(DE)**

(72) Erfinder: **Bruder, Wolfgang**

Heidsiekstrasse 16
W-4800 Bielefeld(DE)
Erfinder: **Meybrink, Jürgen**
Langeoogweg 15
W-4830 Gütersloh(DE)

(74) Vertreter: **Rehmann, Klaus-Thorsten, Dipl.-Ing.**
**c/o Dürkopp Adler AG, Postfach 6**
**W-4800 Bielefeld 1(DE)**

(54) **Anordnung zum Betreiben einer Mehrzahl von Maschinen zur Herstellung von Bekleidungsstücken.**

(57) Es wird ein Netzwerk aus mehreren Maschinen vorgestellt, die über einen gemeinsamen Leitrechner (1) gesteuert werden. Im Leitrechner (1) steht ein Programm zur rechnergestützten Konstruktion von Bekleidungsstücken zur Verfügung. Dieses Programm gestattet es allgemeingültige Konstruktionsanweisungen für ein Schnittmuster im Klartext auf dem Bildschirm (7) darzustellen, wobei die Maße vom Konstrukteur vorgegeben und abgeändert werden können. Das nach den Konstruktionsanweisungen erstellte Schnittmuster kann auf dem Bildschirm (13) graphisch dargestellt und hier vom Konstrukteur (BP) interaktiv verändert werden.

Fig. 6

Die Erfindung betrifft eine Anordnung zum Betreiben einer Mehrzahl von Maschinen zur Herstellung von Bekleidungsstücken nach dem Oberbegriff des Anspruchs 1.

Die Forderung nach einer weitgehenden Automatisierung der Fertigung von Bekleidungsstücken erfordert den Verbund mehrerer von einem Leitrechner gesteuerter Maschinen zu einem Netzwerk. Das heißt, die einzelnen Maschinen sind entweder direkt steuerungstechnisch miteinander verbunden oder jede für sich ist an den Rechner angeschlossen.

Es sind unterschiedliche Computerprogramme (z.B. von den US-amerikanischen Firmen MICRODYNAMICS, Inc ; CDI; ModaCAD, Inc.) bekannt, mit deren Hilfe der Konfektionsdesigner am Bildschirm Kleidungsstücke entwerfen kann.

Die EP 0 205 683 B1 offenbart ein Verfahren zum rechnergestützen Entwurf von Bekleidung, bei dem der Designer seinen Entwurf am Bildschirm an verschiedenen Modellpuppen vergleichen kann. Außerdem ist eine Reihe hierzu verwendbarer Hardware erläutert.

Nachdem ein bestimmtes Kleidungsstück fertig designed ist, muß das zugehörige Schnittmuster erstellt werden. Für die einzelnen Konfektionsgrößen gibt es definierte Algorithmen, um von gemessenen, bzw. gewünschten Körpermaßen, zu den entsprechenden Konstruktionsmaßen zu gelangen. Diese Algorithmen sind beispielsweise in dem in der Konfektionsindustrie bekannten "Verfahren Hohenstein" zusammengefaßt. Die Konstruktionsmaße berücksichtigen die notwendige Zugaben zu den gemessenen Maßen, um später die diversen Einzelteile zu einem bequemen Kleidungsstück miteinander vernähen zu können.

Nach Erstellung des Schnittmusters werden entweder Schablonen angefertigt, entlang denen geschnitten werden kann oder das Schnittmuster wird digitalisiert und mit diesen Daten kann der Zuschnitt auf einer automatischen Schneidanlage durchgeführt werden.

Aufgabe der Erfindung ist es, eine Vernetzung von Maschinen und zugehörigen Computerprogrammen zu schaffen, die es gestattet mit einmal erstellten Daten eine durchgehende Fertigung für Bekleidung zu realisieren und damit die Vernetzung geeignet ist, auf modische Trends oder sonstige Änderungen rasch und einfach reagieren zu können ein Verfahren zur rechnergestützen Konstruktion von Bekleidungsstücken anzugeben.

Die Lösung der Aufgabe bezüglich der Vernetzung erfolgt durch die im Anspruch 1 angegebenen Mittel, bezüglich des Verfahrens durch die Merkmale des Anspruchs 6.

Durch die Bereitstellung eines Computerprogramms mit dem die Anweisungen für die Schnittmustererstellung im Klartext und das Schnittmuster in graphischer Form auf einem Bildschirm darstellbar sind, wird dem Operator die Möglichkeit eingeräumt, ein Schnittmuster von Grund auf zu konzipieren und die Konzeption zu dokumentieren, diverse Veränderungen hieran entweder graphisch oder im Klartext interaktiv durchzuführen und diese Änderungen zu archivieren. Selbsttätig werden zu den eingegeben Körpermaßen die Konstruktionsmaße ermittelt und am Ende der Konstruktionsarbeit die notwendige Nahtzugabe hierzu für jede Naht einzeln vergeben. Mit diesen Daten sind die mit dem Leitrechner in Wirkverbindung stehenden Nähmaschinen zu steuern. Durch die beschriebene Anordnung ist es folglich möglich das Programm zur numerischen Steuerung einer Maschine durch einen Operator zu erstellen, der nicht notwendigerweise Programmierkenntnisse besitzen muß.

Die Fortbildung der Erfindung nach Anspruch 2 auch das Zuschneiden numerisch zu steuern ohne ein besonderes Programm hierfür zu erstellen.

Die Anordnung nach Anspruch 3 gestattet es, das eine reproduzierbare Fertigung möglich ist, weil notwendige Parameter selbsttätig einstellbar sind. Dadurch ist es beispielsweise möglich, unterschiedliche Stoffqualitäten und Fadenarten im Wechsel zu verarbeiten. Von der Näherin braucht in diesem Fall nur an der Maschine der Basisparameter: "Stoffqualität" eingestellt zu werden. Die übrigen Parameter (z.B.: Vorschubgeschwindigkeit, Fadenspannung, Stoffdrückerkraft, usw.,) stellen sich von selbst nach.

Die Ausgestaltung nach Anspruch 4 erlaubt die einfache Kontrolle und die Dokumentation von Erfahrungswerten, auf die immer wieder zurückgegriffen werden kann.

Mit den ergänzenden Merkmalen des Anspruchs 5 ist eine noch weitergehende Automatisierung bzw. Vernetzung zu erzielen. An verschiedenen Arbeitsplätzen vorzunehmende Nähoperationen können über das Transportsystem gesteuert werden. Eine entsprechende Ausgestaltung des Transportsystems erlaubt es, die Zuschnitteile rechnergesteuert direkt vom Schneidtisch zu den Nähmaschinen zu bringen

Anhand von Zeichnungen soll die Erfindung nachfolgend erläutert werden.

Es zeigt:

Fig. 1:	das Schnittmuster eines linken Blazer-Vorderteils,

Fig. 2:	das Schnittmuster des zu Fig. 1 gehörigen Rückenteils

Fig. 3:	das Schnittmuster nach Fig. 1 mit einem veränderten Ärmelausschnitt,

Fig. 4:	das Schnittmuster nach Fig. 2 mit einem entsprechend veränderten Ärmelausschnitt,

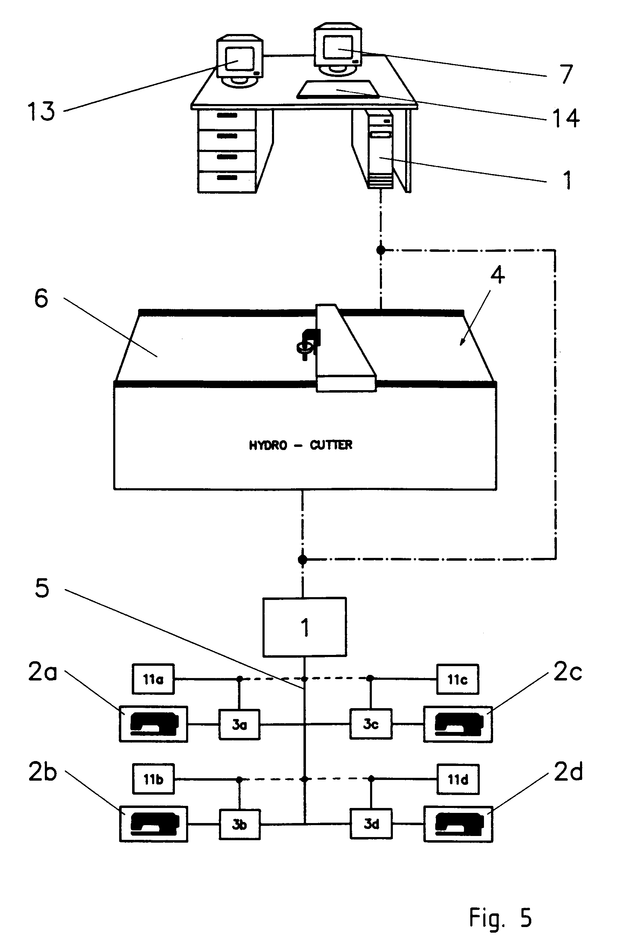

Fig. 5	die schematische Darstellung der erfindungsgemäßen Anordnung mit Transportsystem,

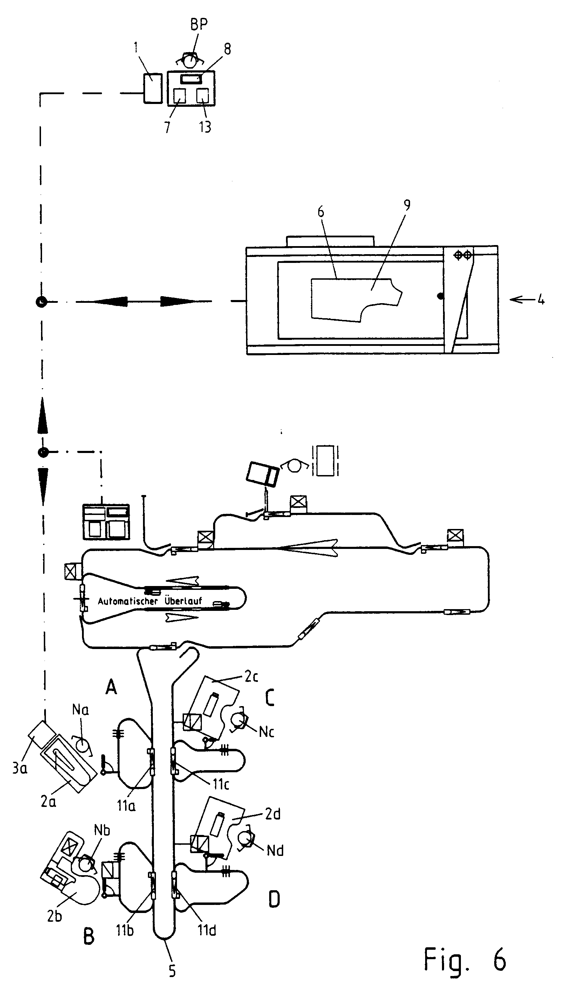

Fig. 6: eine weitere Darstellung der erfindungsgemäßen Anordnung,

Ein gemeinsamer Leitrechner 1 ist mit mehreren Arbeitsplatzrechnern 3a bis 3d elektrisch verbunden. Diese Arbeitsplatzrechner 3a bis 3d sind wiederum verbunden mit je einer automatischen Nähmaschine 2a bis 2d. An den durch die Nähmaschinen 2a bis 2d definierten Arbeitsplätzen werden die einzelnen Werkstücke miteinander vernäht. Die Arbeitsplätze A, B, C, D können in vorteilhafter Weise durch ein vom Leitrechner 1 gesteuertes Transportsystem 5 verbunden sein. Bei diesem Transportsystem handelt es sich um eine bekannte Hängeförderanlage, wie sie in der DE-OS 35 19 312 (= US 4,736,687) beschrieben ist. Die zu den einzelnen Arbeitsplätzen A bis D zu transportierenden Werkstücke werden in kodierte Bügel eingehängt und zu dem jeweiligen Kode entsprechenden Arbeitsplatz transportiert. Den Arbeitsplätzen A bis D vorgeschaltet ist eine automatische Schneidanlage 4, beispielsweise ein Messer- oder Wasserstrahlcutter, die ebenfalls über den Leitrechner 1 gesteuert wird.

An den Leitrechner 1 ist ein Bildschirm 7 und ein Bedienterminal 8 angeschlossen. Ein weiterer, graphikfähiger Bildschirm 13 ist ebenfalls an den Leitrechner 1 angeschlossen. Das Bedienterminal 8 verfügt über eine Eingabetastatur 14 und eine sogenannte Maus oder ein Graphiktablett, zur interaktiven Kommunikation mit dem Leitrechner 1.

Auf dem Leitrechner 1 ist ein Computerprogramm für die automatische Konstruktion von Bekleidungsstücken installiert. Ein solches Computerprogramm wird von der Dürkopp Adler AG unter der Bezeichnung "DataCON" vertrieben. Mit diesem Programm ist es möglich, die Anweisungen nach denen ein Schnittmuster 9, 10 zu konstruieren ist, im Klartext darzustellen. D.h.: die einzelnen Arbeitsschritte, die ein Bekleidungskonstrukteur ausführen muß, um von einem Designmodell zu einer Konstruktionszeichnung zu gelangen, sind in ihrer zeitlichen Reihenfolge im Leitrechner 1 gespeichert und in allgemein verständlicher Form auf dem Bildschirm 7 ablesbar.

Parallel dazu wird das Schnittmuster 9, 10 in graphischer Form auf dem Bildschirm 13 angezeigt. Eine Abänderung des Schnittmusters 9, 10 ist interaktiv sowohl aus der graphischen Darstellung als auch in der klartextlichen Form möglich.

Trotz identischer Arbeitsschritte, um beispielsweise einen Damen-Blazer zu konstruieren, müssen für die einzelnen unterschiedlichen Konfektionsgrößen unterschiedliche Maße übernommen werden. In einer Datenbank, auf die der Leitrechner 1 in Verbindung mit dem Konstruktionsprogramm zurückgreifen kann, sind die Standardmaße für alle Konfektionsgrößen gespeichert. Da bei der Anfertigung von Bekleidung die jeweilige Firmenphilosophie eine große Rolle spielt, können diese Standardmaße je nach Hersteller geringfügig variieren. Diese unternehmensspezifischen Daten sind ebenfalls in dieser Datenbank abgelegt, bzw. können darin aufgenommen werden.

Nachfolgend ist die Klartextdarstellung für die Konstruktion des Schnittmusters 9, das linke Vorderteil eines Damen-Blazers, in der Form wiedergegeben, wie es der Konstrukteur auf dem Bildschirm 7 sieht:

```
;*********************************************************************
; Konstruktionsbeschreibung -DOB- Obere Körperhälfte  R u m p f nach Hohenstein
; Grundkonstruktion mit Abnäherlage Halsansatz Schulter (G-Rumpf)
; Die Konstruktionsbeschreibung gilt für "Normale Abnäher",
; "Verkleinerte Abnäher" und für "vergrößertes Brustvolumen"
; Hinzugefügt wurde der Konstruktionsbaustein "Taille - Huefte"
;
; Datei: Hbody        ; developed by JM
;
;*********************************************************************
;
(fuehre_aus "dob/konstruk/dxx_okh")
;
(loesche_alles)                                               ;Bildschirm loeschen
(setze_Weltausschnitt '(-75 -65) '(40 10))                    ;Koordinatenbereich des Bildschirms
(setze_punkt "P1" "RT" 0.0 0.0 Ja)                              ;P1 als Ausgangspunkt
(Zeichne_benannte_Hilfslinie "RT" "H4" P1 nach_unten D0104 Ja)    ;Hilfslinie bis Hüfttiefenlinie
(trage_ab "H2" "RT" P1 nach_unten D0102 Ja)                      ;Basis Oberweitenlinie = Armlochtiefe
(trage_ab "H3" "RT" P1 nach_unten D0103 Ja)                      ;Basis Tailenlänge = Rückenlänge
(Zeichne_unbenannte_Hilfslinie "RT" H2 nach_links (+ D0710 1.5))  ;Oberweitenlinie
(Zeichne_unbenannte_Hilfslinie "RT" H3 nach_links (+ D0710 1.5))  ;Konstruktionslinie Taille
(Zeichne_unbenannte_Hilfslinie "RT" H4 nach_links (+ D0710 1.5))  ;Konstruktionslinie Hüfttiefe
(trage_ab "P6" "RT" H3 nach_links D0306 Ja)                      ;Einstellung Rückenmitte
(bilde_Schnittpunkt "P7" "RT" H2 waagerecht P1 P6 Ja)            ;Einstellung Oberweitenlinie
(bilde_Schnittpunkt "P5" "RT" H4 waagerecht P1 P6 Ja)            ;Einstellung Hüfttiefenlinie
(trage_ab "I8" "RT" P7 nach_links D0708 Ja)                      ;Rückenbreite / 2
(trage_ab "I9" "VT" I8 nach_links D0809 Ja)                      ;Armlochbreite
(trage_ab "P10" "VT" I9 nach_links D0910 Ja)                     ;Vordere Begrenzung Armloch bis Seitennaht
(trage_ab "P12" "VT" I9 nach_rechts D0912 Ja)                    ;Schnittpunkt Seitennaht - Taillenlinie für
VT
(trage_ab "P121" "RT" I9 nach_rechts D0912 Ja)                  ;Schnittpunkt Seitennaht - Taillenlinie für
RT
(setze_Punkt "H14" "VT" (X P12) (Y H4) Nein)                      ;Schnittpunkt Vordere Mitte - Taillenlini
e
(bilde_Schnittpunkt "P13" "VT" P6 (lotrecht (Winkel P6 P1)) P12 H14 Nein);Taillierungsmitte
(Zeichne_unbenannte_Hilfslinie "RT" P6 (Winkel P6 P13) (Abstand P6 P13)) ;Konstruktionslinie Hüfttiefe
(trage_ab "P40" "RT" P13 nach_rechts D1340 Ja)                   ;Taillierung Mitte Vorderteil
(trage_ab "P41" "VT" P13 nach_links D1341 Ja)                    ;Taillierung Mitte Rückenteil
(trage_ab "P42" "RT" H14 nach_links D1442 Ja)                    ;Taillierung Rückenteil
(trage_ab "P43" "VT" H14 nach_rechts D1443 Ja)                   ;Taillierung Vorderteil
(zeichne_Verbindungslinie "RT" "RM" (list P1 P7 P6 P5))         ;Rückenmitte
(zeichne_Verbindungslinie "RT" "SL" (list P5 P42))             ;Saumlinie
(ZEICHNE_KURVENLINIE "RT" "SN" (LIST P42 P40 P12)             ;SEITENNAHT
                    (LIST (+ 6.19860149 (WINKEL P42 P40)) NACH_OBEN (+ 0.10071970 (WINKEL P40 P121))))
(setze_Punkt "P16" "VT" (X P10) (Y P6) Ja)                      ;Schnittpunkt Vordere Mitte - Hüfttiefenlini
e
(setze_Punkt "P23" "VT" (X P10) (Y P5) Ja)                      ;Saumlinie
(Zeichne_benannte_Hilfslinie "VT" "H15" P16 nach_oben D1516 Ja)   ;Vordere Länge
(trage_ab "P21" "VT" H15 nach_unten D1521 Ja)                    ;Halslochtiefe VT
(trage_ab "P17" "VT" H15 nach_unten D1517 Ja)                    ;Halsansatz Schulter bis Brustpunkt
(ZEICHNE_KURVENLINIE "VT" "SN" (LIST P12 P41 P43)             ;SEITENNAHT
                    (LIST (+ 6.18758265 (WINKEL P12 P41)) NACH_UNTEN (+ 0.11462102 (WINKEL P41 P43))))
(zeichne_Verbindungslinie "VT" "SL" (list P43 P23))           ;Saumlinie
(zeichne_Verbindungslinie "VT" "VM" (list P23 P16 P10 P21))   ;Vordere Mitte
(Zeichne_benannte_Hilfslinie "VT" "P18" H15 nach_rechts D1518 Ja)    ;Halslochbreite VT/2 u. Abnäherpunkt 1
```

```
52 (Zeichne_benannte_Hilfslinie "VT" "P11" P17 nach_rechts D1117 Ja)        ;Brustpunkt
53 (Zeichne_Kurvenlinie "VT" "HLk" (list P21 P18)
54                 (list nach_rechts (Winkel P11 P18)) )      ;Halslochkurve Vt
55 (Trage_Winkel_ab "P20" "VT" P11 P18 im_Uhrzeigersinn DW11 Ja)        ;Abnäherpunkt 2
56 (Zeichne_benannte_Hilfslinie "VT" "P27a" P20 nach_rechts D2027 Ja)       ;Hilfspunkt Schulter Vt
57 (Trage_Winkel_ab "P27" "VT" P20 P27a im_Uhrzeigersinn (+ DW20 Dw11) Ja);Schulterspitze Vt
58 (Zeichne_Verbindungslinie "VT" "BAH" (list P18 P11))        ;Brustabnäher Vt Halslochseite
59 (Zeichne_Verbindungslinie "VT" "BAA" (list P11 P20))        ;Brustabnäher Vt Armlochseite
60 (Zeichne_Verbindungslinie "VT" "SCH" (list P20 P27))        ;Schulter Vt
61 (Zeichne_benannte_Hilfslinie "VT" "P28" I9 nach_oben D0928 Ja)        ;Konstruktionspunkt für Armlochkurve
62 ;(Zeichne_unbenannte_Hilfslinie "VT" I9 nach_unten (Abstand H2 H3))   ;Vordere Armlochbegrenzung
63 (Zeichne_benannte_Hilfslinie "RT" "H29" P1 nach_links D0129 Ja)        ;Halslochbreite Rt/2
64 (Zeichne_benannte_Hilfslinie "RT" "P30" H29 nach_oben D2930 Ja)        ;Halslochtiefe Rt
65 (Zeichne_benannte_Hilfslinie "RT" "H32a" P30 nach_links D3032 Ja)        ;Hilfspunkt Schulter Rt
66 (Trage_Winkel_ab "P32" "RT" P30 H32a gegen_den_Uhrzeigersinn DW30 Ja)  ;Schulterspitze Rt
67 (Zeichne_Kurvenlinie "RT" "HLK" (list P30 P1)        ;Halslochkurve Rt
68               (list (-(Winkel P11 P20)        ;Starttangentenwinkel
69                    (+(abs(-(Winkel P32 P30) (* 2 Pi))) (Winkel P27 P20)))
70                    (lotrecht (Winkel P1 P7)) ))        ;Endtangentenwinkel
71 (trage_ab "H33" "RT" P30 (winkel P30 P32) D3033 Nein)        ;Abstand Halsansatz Schulter bis Rückenab
   näher
72 (trage_ab "H34" "RT" H33 (winkel P30 P32) D3334 Nein)        ;Breite Rückenabnäher
73 (Zeichne_benannte_Hilfslinie "RT" "P35" H33 nach_unten 8.0 Ja)        ;Abnäherschenkel Rückenabnäher Schulter
74 (berechne_Dachpunkte "34a" "33a" "RT" P32 H34 P35 H33 P30)        ;Dachkonstruktion Rückenabnäher
75 (zeichne_Verbindungslinie "RT" "RAA" (list 34a P35))        ;Rückenabnäher Armlochseite
76 (zeichne_Verbindungslinie "RT" "RAH" (list P35 33a))        ;Rückenabnäher Halslochseite
77 (zeichne_Verbindungslinie "RT" "SLA" (list P32 34a))        ;Schulterlinie Armlochseite
78 (zeichne_Verbindungslinie "RT" "SLH" (list 33a P30))        ;Schulterlinie Halslochseite
79 (Zeichne_benannte_Hilfslinie "RT" "P38" I8 nach_oben D0838 Ja)        ;Konstruktionspunkt für Armlochkurve
80 (Zeichne_Kurvenlinie "Vt" "ALK" (list P27 P28 P12)        ;Armlochkurve Vt
81              (list (Lotrecht (Winkel P27 P20))
82                   nach_unten nach_rechts))
83 (Zeichne_Kurvenlinie "Rt" "ALK" (list P12 P38 P32)        ;Armlochkurve Rt
84              (list  nach_rechts nach_oben (Lotrecht (winkel P32 34a))))
85 (trage_ab "P46" "RT" P6 (Winkel P6 P13) D0646 Nein)        ;Rückentaillierungsmitte
86 (trage_ab "P47" "RT" P7 nach_links D0747 Ja)        ;Rückentaillierung oben
87 (trage_ab "P48" "RT" P46 nach_rechts D4648 Ja)        ;Rückentaillierung mitte rechts
88 (trage_ab "P49" "RT" P46 nach_links D4649 Ja)        ;Rückentaillierung mitte links
89 (bilde_Schnittpunkt "P50" "RT" P47 (winkel P47 P46) H4 P23 Ja)        ;Rückentaillierung unten
90 (zeichne_Verbindungslinie "RT" "TA" (list P50 P49 P47 P48 P50));Rückentaillenabnäher
91 (bilde_Schnittpunkt "P19" "VT" P11 nach_unten P16 H3 Nein)        ;Mitte Vorderteilabnäher
92 (trage_ab "P44" "VT" P19 nach_rechts D1944 Ja)        ;Voderteilabnäher mitte rechts
93 (trage_ab "P45" "VT" P19 nach_links D1945 Ja)        ;Vorderteilabnäher mitte links
94 (bilde_Schnittpunkt "P51" "VT" P11 nach_unten P23 H4 Ja)        ;Untere Spitze Vorderteilabnäher
95 (zeichne_Verbindungslinie "VT" "TA" (list P51 P45 P11 P44 P51));Rückentaillenabnäher
96
97
98 (Setze_Referenzpunkt "VT" P23)        ;Referenzpunkt für Vorderteil
99 (Setze_Referenzpunkt "RT" P42)        ;Referenzpunkt für Rückenteil
100 (Positioniere_Teil "VT" -54.0 -60.0)
101 (Positioniere_Teil "RT" 0.0 -60.0)
102 ;(drehe_Teil "RT" P47 (deg_to_rad 45))        ; nur als Testbeispiel
103
104 ;*******************************************************************************
105 ; Nahtzugaben und Zwicke
```

```
;******************************************************************
;
; VORDERTEIL **************
;
;(konstruiere_Dach "VT" "BAD" "BaA" "BaH" 0 0) ; Dachkonstruktion Abnäher unter Armlochseite gelegt
(konstruiere_Dach "VT" "BAD" "BaH" "BaA" 0 0) ; Dachkonstruktion Abnäher unter Halslochseite gelegt, hierbei gibt
        es im Verlauf keine Schneidelinie

(konstruiere_Nahtzugabe "VT" '(
                                ("VM"  1.2)
                                ("HLK" 1.2 abstand_zu_Naehlinie_1 2)
                                ("BAD" 1.2)
                                ("SCH" 1.2)
                                ("ALK" 1.2 lot_auf_naehlinie_2)
                                ("SN"  1.2 Slinie_1_an_Nlinie_2_gespiegelt)
                                ("SL"  2.2);Briefecke_an_Naehlinie_2 P16 1 2.4 1 1.2 3.6 1.2)
                                )
)

(segmentiere_Naehlinie "HZP" "VT" "HLK" 2 Ja) ; Zwickpunkt in Mitte der Halslochkurve

(setze_Zwick "vt" "HLK" HZP1) ;Zwick im Halsloch
(setze_Zwick "vt" "ALK" P28)  ;Zwick in Armlochkurve
(setze_Zwick "vt" "ALK" P12)  ;Testzwick Ende Armlochkurve; Beispiel wie aus einem Punkt
(setze_Zwick "vt" "SN"  P12)  ;Testzwick Anfang Seitennaht; zwei Zwicke entstehen können
(setze_Zwick "vt" "SN"  P41)  ;Zwick Mitte Seitennaht
(setze_Zwick "vt" "VM"  P23)  ;Zwick Anfang vordere Mitte
(setze_Zwick "vt" "VM"  P21)  ;Zwick Ende   vordere Mitte

;(spiegel_Teil "VT" P43 (list (x P43) (+ (y P43) 2)) )  ; nur als Testbeispiel
;
; RUECKENTEIL ****************
;
(konstruiere_Dach "RT" "RAD" "RaH" "RaA" 0 0)         ; Dachkonstruktion Abnäher unter Halslochseite gelegt
;(konstruiere_Dach "RT" "RAD" "RaA" "RaH" 0 0)        ; Dachkonstruktion Abnäher unter Armlochseite gelegt
(konstruiere_Nahtzugabe "RT" '(
                                ("SN"  1.2 lot_auf_naehlinie_1)
                                ("ALK" 1.2)
                                ("SLA" 1.2)
                                ("RAD" 1.2)
                                ("SLH" 1.2)
                                ("HLK" 1.2)
                                ("RM"  1.2); Briefecke_an_Naehlinie_1 P6 1 2.4 1 1.2 3.6 1.2)
                                ("SL"  2.2 Slinie_2_an_Nlinie_1_gespiegelt)
                                )
)
(segmentiere_Naehlinie "ALP" "RT" "ALK" 3 Ja) ; Zwickpunkt in Armlochkurve
(setze_Zwick "Rt" "SN"  P40)    ;Zwick Mitte Seitennaht
(setze_Zwick "Rt" "SN"  P121)   ;Zwick Ende Seitennnaht
(setze_Zwick "Rt" "ALK" P121)   ;Zwick Anfang Armlochkurve
(setze_Zwick "Rt" "ALK" ALP1)   ;Zwick in Armlochkurve
(setze_Zwick "Rt" "ALK" P32)    ;Zwick Ende Armlochkurve
```

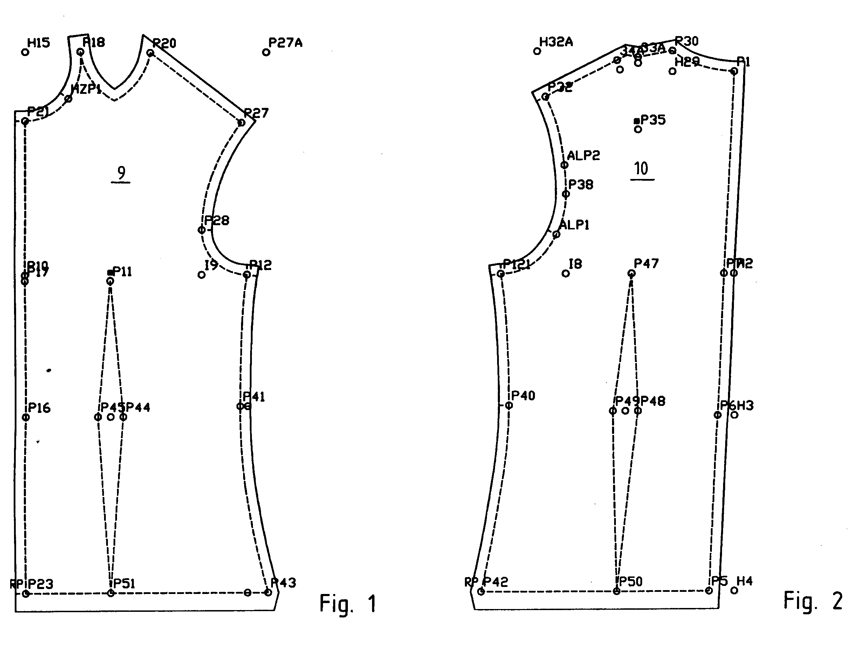

In der linken Spalte ist dabei die jeweilige Konstruktionsanweisung in der jeweils zeitlichen Reihenfolge dargestellt und gegenüber dazu in der rechten Spalte steht erläuternd dazu, wohin die Anweisung führt oder welcher Algorithmus dahintersteckt. Die hier angegebenen Punkte (beispielsweise: Zeile 3, "P1") sind in den Figuren 1 bis 4 wiederzufinden ("P1" ist der Ausgangspunkt am Halsansatz - oben rechts in Fig. 2 dargestellt -).

Die jeweiligen Maße der abzutragenden Strecken ( -Konstruktionsmaße- beispielsweise "H2"; "I8") werden jeweils vom Leitrechner 1 abgefragt, indem sie in logischer Reihenfolge auf dem Bildschirm 7 angezeigt werden, und sind dann vom Konstrukteur über die Tastatur 14 in Zentimetern oder Millimetern einzugeben. Mit diesen Maßen werden über das Graphikprogramm die Schnittmuster 9, 10 nach Fig. 1 und 2 erstellt und auf dem Graphikbildschirm 13 angezeigt. Dabei werden alle Einzelheiten eines Schnittmusters, so beispielsweise auch die Lage und Größe von Abnähern ( Linien P11-P44-P51-P45; P47-P48-P50-P49 ), berücksichtigt.

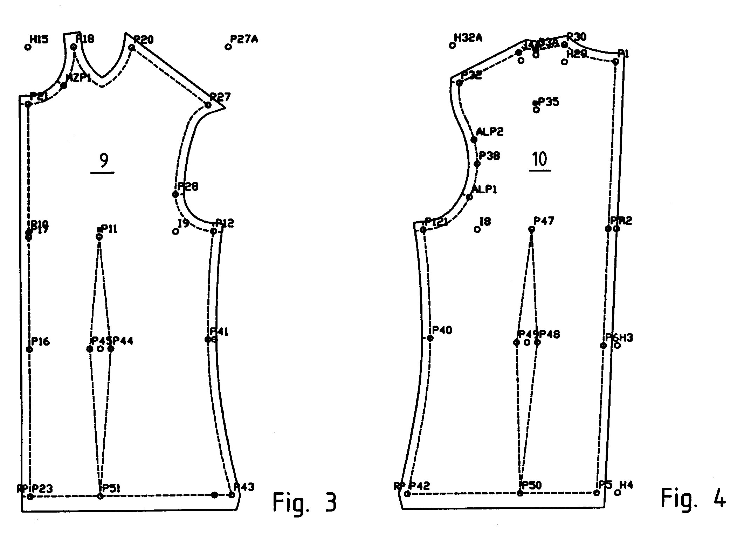

Das Konstruktionsprogramm ist so entwickelt, daß die Maße, die an verschiedenen Schnittmusterteilen übereinstimmen müssen - ein Vorder- und ein Rückenteil müssen beispielsweise da, wo sie später zusammengenäht werden sollen, dieselbe Länge haben -, selbsttätig übernommen werden. Damit sind Fehler ausgeschlossen. Das nach dem Schnittmuster 9 hergestellte Zuschnitteil wird später beispielsweise mit dem nach dem Schnittmuster 10 hergestellten Zuschnitteil entlang der Linien P20-P27 mit P32-P121 und P12-P41-P43 mit P121-P40-P42 vernäht. Eine Veränderung des Armausschnittes (Linie P27-P28-P12) des Schnittmusters 9 bewirkt gleichzeitig eine entsprechende Veränderung des Armausschnitts (Linie P32-P38-P121) des Schnittmusters 10 - vgl. Fig. 1,2 mit 3,4. Die hier dargestellte Veränderung ist allerdings stark übertrieben dargestellt und deshalb völlig praxisfern Wenn ein Schnittmuster (z.B. 9, 10) erstellt ist, kann der Konstrukteur BP interaktiv über das Bedienterminal 8 Veränderungen vornehmen und die Änderungen am Bildschirm 13 beobachten. Figuren 3 und 4 zeigen die Teile nach Figuren 1 und 2, wobei der Armausschnitt nach der Linie P27-P28-P12 (Fig. 1, 3) abgeändert wurde. Selbsttätig wurde dabei auch das Rückenteil nach der Linie P32-P38-P121 entsprechend abgeändert. Gleichzeitig wurden die Änderungen auch in die Klartextdarstellung übernommen. Die Zeilen 80 bis 84 der Anzeige auf dem Bildschirm 7 lauten dann:

```
80  (ZEICHNE_KURVENLINIE "VT" "ALK" (LIST P27 P28 P12)          ;ARMLOCHKURVE VT
81                        (LIST (+ 5.70000000 (LOTRECHT (WINKEL P27 P20)))
82                        NACH_UNTEN NACH_RECHTS))
83  (ZEICHNE_KURVENLINIE "RT" "ALK" (LIST P12 P38 P32)          ;ARMLOCHKURVE RT
84                        (LIST  NACH_RECHTS NACH_OBEN (+ 5.70000000 (LOTRECHT (WINKEL P32 34A)))))
```

Diese Änderungen werden im Leitrechner 1 gespeichert oder werden in einer Datenbank abgelegt und sind jederzeit wieder abrufbar.

Ebenso kann das Schnittmuster auch über die Konstruktionsanweisungen in der Klartextdarstellung verändert werden, wenn hier an den jeweils geändert gewünschten Stellen andere Maße angegeben werden.

Zu den Nahtlinien, das sind die in den Figuren gestrichelt dargestellten Linien, ermittelt der Leitrechner 1 nach dem "Verfahren Hohenstein" die notwendigen Nahtzugaben N und erstellt selbsttätig das in den Figuren in durchgezogenen Linien dargestellte Schnittbild. Damit liegt das Schnittbild in digitaler Form vor. Die vom Leitrechner 1 gesteuerte automatische Schneidanlage 4 kann den Zuschnitt nach diesem Schnittbild vornehmen, ohne daß zusätzliche Programmierarbeiten notwendig wären oder das Schnittmuster auf andere Art nochmals bearbeitet werden müßte. Dabei ist es natürlich selbstverständlich, daß wie bisher auch ein entsprechender Ausgangs- oder Nullpunkt auf dem Schneidtisch 6 definiert wird, auf den die digitalen Daten zurückbezogen werden können. Damit ein reproduzierbarer Ausgangspunkt geschaffen wird.

Die zugeschnittenen Teile werden, bevor sie vom Schneidtisch 6 abgenommen werden, kodiert. Die Kodierung enthält in maschinenlesbarer Form alle das jeweilige Zuschnitteil (z.B. 9, 10) betreffenden Angaben, die notwendig sind, um jedes Teil reproduzierbar auffinden zu können. In vorteilhafter Weise wird hierzu ein programmierbarer Kode-Träger verwendet. Dabei kann die Kodierung entweder direkt auf das Zuschnitteil aufgebracht werden oder der Tragbügel, in den die einzelnen Teile eingehängt werden, erhält eine Kodierung. Letzteres hat den Vorteil, daß der Kode-Träger bei verschiedenen Teilen grundsätzlich an derselben Stelle angebracht werden kann, was beim späteren Ablesen des Kodes Fehler vermeiden hilft. Die Kodierung wird durch den Leitrechner 1 gesteuert. Dadurch kann gleichzeitig festgelegt werden, welches Teil auf welcher der Nähmaschinen 2a bis 2d genäht werden soll. Diese Festlegung kann ebenfalls kodiert dem Zuschnitteil mitgegeben werden.

Nach der Kodierung werden die Zuschnitteile an das Transportsystem 5 übergeben. An jedem der Arbeitsplätze A, B, C, D ist innerhalb des Transportsystems 5 ein Kodelesegerät 12a bis 12d integriert, das so angeordnet ist, daß der Kode-Träger einwandfrei abgelesen werden kann. Kodiergeräte, Kode-Träger und Kodelesegeräte sind in vielfacher Ausführung auf dem Markt erhältlich. Der Fachmann wird eine entsprechende Auswahl treffen. Aus diesem Grund wird hier auch auf eine ausführliche Darstellung verzichtet.

Die in dem Transportsystem 5 befindlichen Zuschnitteile werden an den einzelnen Arbeitsplätzen A, B, C, D entlang transportiert. Der Kode jedes Zuschnitteiles wird dabei von jedem Kodelesegerät 12a bis 12d abgelesen.

Wenn das dem Arbeitsplatz A zugeordnete Kodelesegerät 12a dabei erkennt, daß das gerade abgelesene Zuschnitteil auf der Nähmaschine 2a vernäht werden soll, wird das Zuschnitteil aus dem Transportsystem 5 an der Abgabestelle 11a ausgeschleust und an den Arbeitsplatz A gebracht.

Über den Arbeitsplatzrechner 3a, der in direkter Verbindung mit dem Leitrechner 1 steht, wird die Nähmaschine 2a gesteuert. Außerdem steht der Arbeitsplatzrechner 3a in Verbindung mit dem Kodelesegerät 12a und ist somit über die jeweils am Arbeitsplatz A befindliche Zuschnitteile informiert. Im Leitrechner 1, bzw. einer Datenbank, auf die der Leitrechner 1 Zugriff hat, ist das Nahtbild ( in den Figuren mit getrichelten Linien dargestellt ) jedes Zuschnitteiles, das mittels des Konstruktionsprogrammes erstellt wurde, gespeichert bzw. abgelegt. Durch Informationsaustausch des Leitrechners 1 mit dem Arbeitsplatzrechner 3a ist es möglich, die Nähmaschine 2a so zu steuern, daß von ihr ein bestimmtes Nahtbild genäht wird, um zwei Teile miteinander zu vernähen. Die Näherin $N_a$ muß nur die Einzelteile entsprechend vorlegen und der Nähmaschine 2a einen Startbefehl erteilen. Notwendigerweise wird sie zuvor allgemeine Nähparameter, wie beispielsweise die Maschinendrehzahl, die Fadenspannung, die Drückerfußkraft usw., die abhängen von dem zu vernähenden Material, an der Nähmaschine 2a einstellen, bzw. voreingestellte Werte der Parameter - nach entsprechenden Nähversuchen - korrigieren. Über eine Rückkopplung mit dem Arbeitsplatzrechner 3a werden diese eingestellten Werte gespeichert und können vom Leitrechner 1 in einer entsprechenden Datenbank abgelegt werden. Die Nähmaschinen 2a bis 2d sind mit Servostellgliedern, wie Schrittmotoren oder Vielstellungszylindern (vgl. DE-PS 36 32 355 ) ausgerüstet, mit denen die veränderbaren Nähparameter reproduzierbar eingestellt werden können. Über entsprechende Steuerungen, die hier nicht näher erläutert sind, deren Realisierung für den Fachmann aber keine Schwierigkeit bedeutet, werden die Stellglieder an der Nähmaschine 2a bis 2d vom jeweiligen Arbeitsplatzrechner 3a bis 3d oder direkt vom Leitrechner 1 kontrolliert. Einmal vorgegebene Werte für bestimmte Nähgutteile können damit immer wieder selbsttätig eingestellt werden. Über die den Zuschnitteilen zugeordnete Kodierung ist eine Zuordnung der Nähparameter ebenfalls möglich. Mit der erfindungsgemäßen Anordnung ist es also möglich, unterschiedliche Materialien, Nähgutteile unterschiedlicher Konfektionsgrößen und selbst unterschiedliche Konfektionsteile im Wechsel zu verarbeiten. Außerdem kann eine Maßanfertigung in einen laufenden Produktionszyklus mit aufgenommen werden, ohne daß dieser nachhaltig beeinflußt würde. Durch das Konstruktionsprogramm können Veränderungen, die modischen Einflüssen unterliegen jederzeit problemlos realisiert werden, weil keine völlig neue Konstruktion des Bekleidungsteiles notwendig ist, sondern die von einer partiellen Abänderung betroffenen Anschlußmaße selbsttätig mitverändert werden, ohne daß der Konstrukteur hierauf achten müßte. Das bedeutet also, daß wenn die Mode sich dahin ändert, daß ein Herrensakko länger wird, braucht der Konstrukteur im Konstruktionsprogramm nur den Zahlenwert für die gewünschte Länge abändern. Die Anpassung an die veränderte Länge der von der Länge eines Sakkos abhängenden Taschenschlitze, Knopfleiste, Abnäher usw. erfolgt selbsttätig.

**Patentansprüche**

**1.** Anordnung zum Betreiben einer Mehrzahl von Maschinen zur Herstellung von Bekleidungsstücken in einem Netzwerk,

gekennzeichnet durch
- die Bereitstellung eines Rechners (1) mit einem Bildschirm (7), auf dem ein in einer Hochsprache erstelltes Computerprogramm für die Konstruktion von Bekleidungsstücken, insbesondere die Anweisung nach welchen Einzelschritten das Schnittmuster (9, 10) eines bestimmten Bekleidungsstücks erzeugbar ist, im Klartext dargestellt und geändert werden kann,
- die Bereitstellung eines Graphik-Computerprogramms zur Darstellung des Schnittmusters (9, 10) auf einem Bildschirm (13),
- die Option, durch interaktive Kommunikation zwischen der Bedienperson (BP) und dem Rechner (1) das auf dem Bildschirm (13) dargestellte Schnittmuster (9, 10) beliebig abändern zu können, wobei die vorgenommenen Abänderungen in einer Datenbank gespeichert werden, auf die auch das Konstruktionsprogramm Zugriff hat, und die Abänderungen im Klartext auf dem Bildschirm (7) darstellbar sind,
- die Bereitstellung einer Datenbank, in der Grundanweisungen zur Konstruktion bestimmter Kleidungsstücke und konfektionsgrößenbedingte Abweichungen hierzu gespeichert sind, und die Verwendung einer weiteren Datenbank, mit deren Hilfe Körpermaße in Konstruktionsmaße umsetzbar sind
- die Bereitstellung mindestens einer von dem Rechner (1) gesteuerten Nähmaschine (2a bis 2e) und der Vorgabe der entsprechend dem bestimmten Nahtverlauf von der Nähmaschine (2a bis 2e) einzuhaltenden Nähparameter durch den Rechner (1),
- die Option, die der Nähmaschine (2a bis 2e) vorgegebenen Parameter durch die Bedienperson ($N_a$ bis $N_e$) zu verändern, wobei die ausgeführten Veränderungen vom Rechner (1) übernommen werden und gleichzeitig das Nähprogramm (Nahtverlauf, Nähparameter) abgeändert und gespeichert wird,

2. Anordnung nach Anspruch 1,

gekennzeichnet durch

die Bereitstellung einer in das Netzwerk integrierten automatische Schneidanalage (4), die mit dem Rechner (1) so in Wirkverbindung steht, daß das erstellte und gegebenenfalls abgeänderte Schnittmuster (9, 10) selbsttätig ausschneidbar ist.

3. Anordnung nach Anspruch 1 oder 2,

gekennzeichnet durch
- die Bereitstellung einer automatischen Nähmaschine (2a bis 2e) mit Servovorrichtungen zum selbsttätigen Einstellen einer Mehrzahl der von dem jeweils aktuellen Nähprogramm vorgegebenen Nähparameter, wobei die Basisparameter entweder unmittelbar an der Nähmaschine (2a bis 2e) oder am Rechner (1, 3a bis 3e) vorgebbar sind.

4. Anordnung nach Anspruch 1,

dadurch gekennzeichnet,

daß die gespeicherten Nähparameter ebenfalls im Klartext auf dem Bildschirm (7) angezeigt werden.

5. Anordnung nach einem oder mehreren der vorstehenden Ansprüche,

gekennzeichnet durch

ein Transportsystem (5), das verschiedene Nähmaschinen (2a bis 2e) miteinander verbindet und über den Rechner (1 oder 3a bis 3e) gesteuert wird.

6. Verfahren zum rechnergestützten Konstruieren von Bekleidungsstücken,

dadurch gekennzeichnet, daß
- eine Anweisung, welche konstruktiven Einzelschritte durchzuführen sind und welche Längenmaße die Einzelschritte aufweisen müssen, um ein Schnittmuster aufzuzeichnen, im Klartext erstellt wird,
- diese Anweisung in eine Computersprache (Hochsprache) transformiert und in einem Rechner (1) abgespeichert wird,
- die Darstellung dieser Anweisung im Klartext auf einem mit dem Rechner verbundenen Bildschirm (7) erfolgt, wobei die Bedienperson (BP) die einzelnen Längenmaße beliebig variieren kann, so daß eine spezielle Anweisung für ein spezielles Schnittmuster (9, 10) entsteht,
- diese spezielle Schnittmuster (9, 10) auf einem mit dem Rechner (1) verbundenen Bildschirm (13) graphisch dargestellt wird,
- die Bedienperson (BP) in interaktiver Kommunikation mit dem Rechner (1) das auf dem Bildschirm (13) dargestellte Schnittmuster (9, 10) verändern kann,
- diese Veränderungen in die Konstruktionsanweisung übernommen und im Rechner (1) gespeichert werden, so daß sie auch im Klartext auf dem Bildschirm (7) darstellbar sind,

7. Verfahren nach Anspruch 6,

dadurch gekennzeichnet, daß
- die Abhängigkeiten einzelner Konstruktionsmaße eines oder unterschiedlicher Schnittmuster voneinander (Anschlußmaße) definiert und bei der Erstellung der Konstruktionsanweisung berücksichtigt werden und
- die von der Bedienperson (BP) vorgenommen Änderungen am Schnittmuster (9) selbsttätig entsprechend der jeweiligen Abhängigkeit auch an den Anschlußmaßen des selben oder eines anderen Schnittmusters (10) ausgeführt werden

9

Fig. 2

Fig. 1

10

Fig. 4

Fig. 3

HYDRO — CUTTER

Fig. 5

Fig. 6

Europäisches
Patentamt

**EUROPÄISCHER RECHERCHENBERICHT**

Nummer der Anmeldung

EP    91 10 8905

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 137 612 (THE RICHMAN BROTHERS CY) <br> * das ganze Dokument * <br> --- | 1-7 | A41H3/00 |
| X | EP-A-0 227 642 (THE RICHMAN BROTHERS CY) <br> * das ganze Dokument * <br> --- | 1-7 | |
| A | FR-A-2 535 086 (GERBER SCIENTIFIC INC) <br> * das ganze Dokument * <br> --- | 1-7 | |
| X | CONFECTIE. <br> Bd. 22, Nr. 3, 31. März 1974, DOETINCHEM NL <br> Seiten 15 - 17; <br> A. STUCKEY: 'de technologie van de confektieproduktie in de komende 25 jaren' <br> * das ganze Dokument * <br> --- | 1-7 | |
| A | MANUFACTURING CLOTHIER. <br> Bd. 70, Nr. 4, 30. April 1989, LONDON GB <br> Seiten 85 - 89; <br> M. DISHER: 'cad/cam directions' <br> a suggested plan for computer integration <br> * Abbildung 3 * <br> ----- | 1-7 | **RECHERCHIERTE SACHGEBIETE (Int. Cl.5)** <br><br> A41H |

Der vorliegende Recherchenbericht wurde für alle Patentansprüche erstellt

| Recherchenort | Abschlußdatum der Recherche | Prüfer |
|---|---|---|
| DEN HAAG | 24 JANUAR 1992 | VANMOL M. |